# EUROPEAN PATENT SPECIFICATION

(11) **EP 2 110 096 B1**
(45) Date of publication and mention of the grant of the patent: **07.08.2013**
(21) Application number: 08425265.9
(22) Date of filing: 18.04.2008
(51) Int. Cl.: A61C 1/00, A61C 17/06

(54) **Dental work station**
Zahnärztlicher Arbeitsplatz
Poste de travail dentaire

(43) Date of publication of application: 21.10.2009
(73) Proprietor: CEFLA SOCIETA' COOPERATIVA, 40026 Imola (BO) (IT)
(72) Inventor: Bruni, Paride, 40026 Imola (IT); Nanni, Eros, 40023 Castel Guelfo di Bologna (IT); Pirazzini, Giacomo, 40026 Imola (IT)
(74) Representative: Bergadano, Mirko

(56) References cited:
- EP-A- 1 595 510
- WO-A-2006/014080
- AU-A- 5 315 579
- US-A- 3 078 579
- US-A- 3 771 557
- US-A1- 2003 129 561

## Description

The present invention relates to a dental work station. In dentistry, a work station according to the preamble of Claim 1 is known for example from document EP-A1-1 595 510. The work station comprises a patient's chair; a number of routine dental instruments, such as turbines, micromotors, water/air syringes, ablators, cup-filling taps; and a supply unit normally connected to the water mains for supplying water, or water plus a hygienizing additive, to the dental instruments.

The supply unit comprises a distribution tank connected to the water mains; two storage tanks mounted parallel to each other between the distribution tank and the dental instruments, and having each at least a respective supply outlet connected to distribution tank itself; and, for each storage tank, a valve device selectively controlling liquid supply through the relative supply outlet.

Each valve device comprises a pneumatic valve mobile between an open position and a closed position of the relative supply outlet, a pneumatic circuit to supply compressed air to the pneumatic valve, and a solenoid valve placed along the pneumatic circuit to selectively control compressed air supply to the pneumatic valve itself.

Known dental work stations of the type described above have various drawbacks, mainly due to the fact that said valve devices are relatively complex and expensive.

It is the object of the present invention to provide a dental work station which is free of the aforementioned drawbacks and is of simple and economic construction.

According to the present invention, there is provided a dental work station as claimed in the annexed claims.

A non-limiting embodiment of the present invention will be described by way of example with reference to the accompanying drawings, in which:
Figure 1 shows a schematic view in perspective of a preferred embodiment of the dental work station according to the present invention;
Figure 2 shows a schematic view of a detail of Figure 1; and
Figure 3 is a lateral schematic view of a detail of Figure 2, having parts in section for clarity's sake.

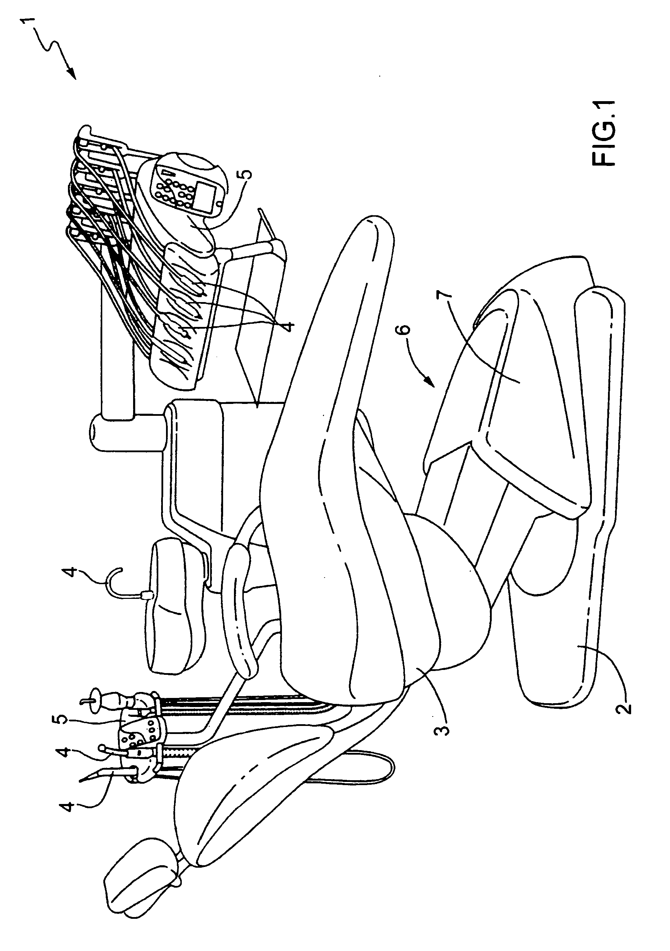

With reference to Figure 1, number 1 indicates as a whole a dental work station comprising a base 2; a chair 3 mounted on base 2; a number of routine dental instruments 4 as, for instance, patient mouthwash cup-filling tap, turbines, micromotors, water/air syringes and/or ablators mounted, in the example shown, on two supporting panels 5; and a supply unit 6 mounted inside a shaped portion 7 of base 2 to supply a liquid (in the example water) to instruments 4.

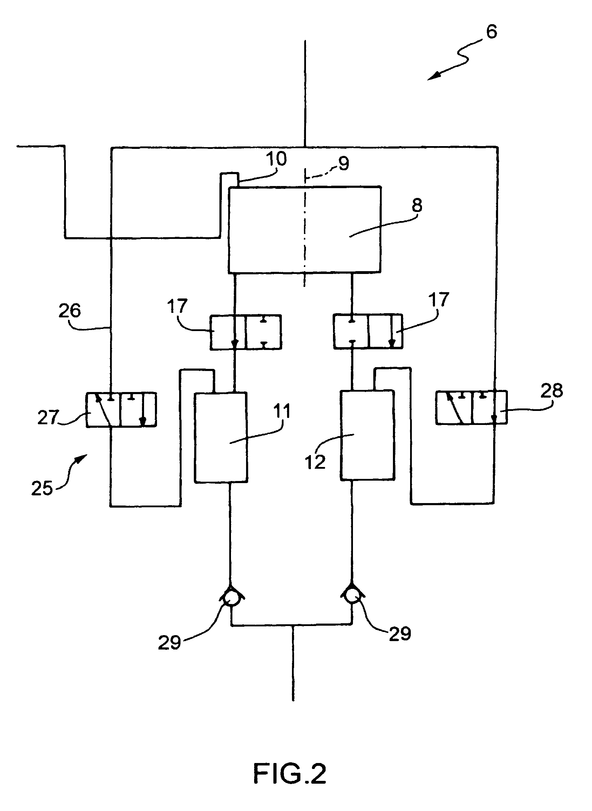

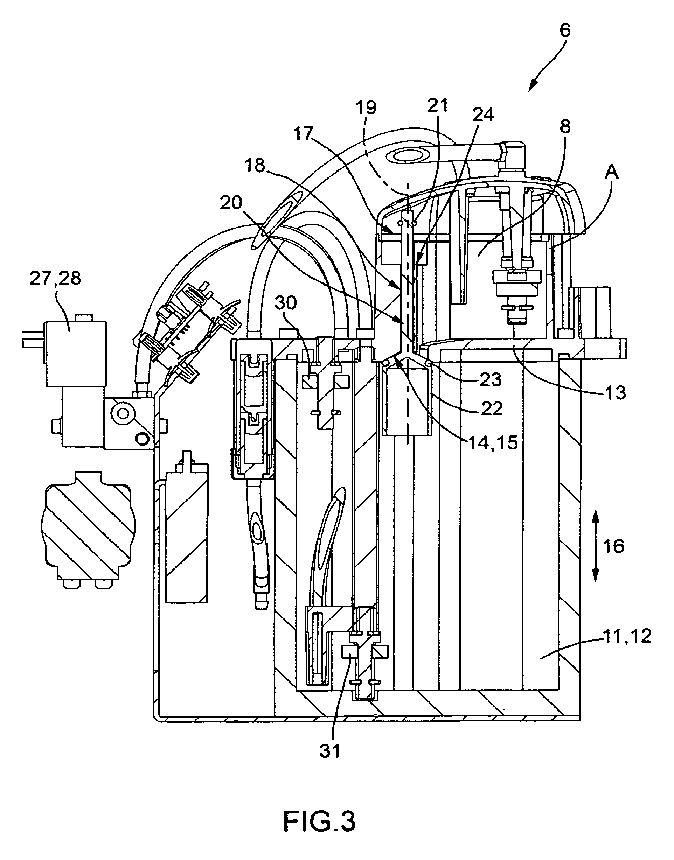

As shown in Figures 2 and 3, unit 6 comprises an atmospheric-pressure distribution tank 8 having a substantially vertical longitudinal axis 9 and a top outlet 10 connected to the water mains, and comprising an overflow opening A located below outlet 10 to prevent backflow of water from unit 6 to the water mains.

Tank 8 is mounted above two storage tanks 11, 12, which are mounted parallel to each other between tank 8 and instruments 4, is separated from tanks 11, 12 by a substantially level and horizontal partition wall 13, and is hydraulically connected with each tank 11, 12 through a relative supply outlet 14, 15 obtained through wall 13 in a substantially vertical direction 16.

Water supply through each outlet 14, 15 is selectively controlled through a relative valve device 17 comprising a floating shutter 18, having a longitudinal axis 19 parallel to direction 16, and comprising, in turn, an elongated stem 20, slidingly coupled to relative outlet 14, 15, and provided with a superior stop ring 21 radially protruding towards the exterior of the external surface of stem 20 itself.

Shutter 18 comprises, moreover, a closing element 22, which protrudes from stem 20 inside relative tank 11, 12, is an inverted bell-shaped element, and is provided with an annular gasket 23 mounted on the external surface of element 22 coaxially to axis 19.

Shutter 18 is normally placed in an open lowered position (not shown), where ring 21 is in contact with an end of stroke abutment 24 obtained inside tank 8 transversally to direction 16, and is shifted from the open lowered position to a closed raised position (Figure 3), where element 22 is fluidproof coupled with respective outlet 14, 15, by the thrust exerted on shutter 18 itself by the water present in relative tank 11, 12.

Water supply from tanks 11, 12 to instruments 4 is selectively controlled through a pumping device 25 comprising a pneumatic circuit 26 communicating with tanks 11, 12; two solenoid valves 27, 28, which are placed along circuit 26 to selectively control compressed air supply to tanks 11 and 12 respectively, and are each mobile between a relative open position (shown for solenoid valve 28 in Figure 2) and a relative closed position (shown for solenoid valve 27 in Figure 2); and two non-return valves 29 mounted at the outlet of tanks 11, 12.

The opening of each solenoid valve 27, 28, and, therefore, the pressurisation of relative tank 11, 12 are operated by an upper floating switch 30, which is mounted inside relative tank 11, 12 and is mobile in direction 16 between a lowered position (not shown) and a raised position (Figure 3), where floating switch 30 signals the complete filling of relative tank 11, 12 and operates the opening of relative solenoid valve 27, 28 and the compressed air supply inside relative tank 11, 12 itself.

The closing of each solenoid valve 27, 28 and the emission of compressed air contained in relative tank 11, 12 are operated by a lower floating switch 31, which is mounted inside relative tank 11, 12, and is mobile in direction 16 between a raised position (Figure 3) and a lowered position (not shown), where floating switch 31 signals the complete emptying of relative tank 11, 12 and operates the closing of relative solenoid valve 27, 28.

The functioning of supply unit 6 will now be described with reference to Figures 2 and 3 and to only one storage tank 11, 12, in the example tank 11, and starting from a moment when tank 11 is empty.

The emptying of tank 11 entails the shift of floating switches 30, 31 to their lowered positions, the closing of solenoid valve 27, and the emission of the compressed air still contained in tank 11 outside tank 11 itself.

The absence of compressed air in tank 11 entails the gravity shift of shutter 18 from its closed raised position to its open lowered position and, therefore, the supply of water from distribution tank 8 to tank 11 through outlet 14.

The filling of tank 11 entails the shift of obturator 18 from its open lowered position to its closed raised position and of floating switches 30, 31 from their lowered positions to their raised positions under the thrust of the water supplied inside tank 11 itself.

Once placed in its raised position, floating switch 30 operates the opening of solenoid valve 27 and the supply of compressed air to tank 11 so that shutter 18 is maintained in its closed raised position.

Concerning the above said, it is appropriate to specify that:
shutter 18 is lifted by the thrust of water supplied inside tank 11;
shutter 18 is fluidproof coupled with relative outlet 14, 15, and is maintained in its closed raised position by the thrust of compressed air supplied inside tank 11; and
water supply to instruments 4 and, therefore, the emptying of tank 11 are operated by the opening of instruments 4 themselves.

According to a non-illustrated embodiment, supply unit 6 comprises, moreover, a supply device to add a hygienizing liquid to the water contained inside distribution tank 8 and to supply, therefore, a liquid solution made by water and a hygienizing liquid. The supply device comprises a tank for the hygienizing liquid and a dosing unit to draw a pre-determined quantity of hygienizing liquid from the tank and supply it to distribution tank 8.

## Claims

1. A dental work station comprising a number of dental instruments (4); and a supply unit (6) for supplying a liquid to the dental instruments themselves (4); the supply unit (6) comprising a distribution tank (8) connected to a hydraulic water supply circuit; two storage tanks (11, 12) mounted parallel to each other, located between the distribution tank (8) and the dental instruments (4), and comprising each at least a respective supply outlet (14, 15) communicating with distribution tank (8); for each storage tank (11, 12), a valve device (17) to selectively control liquid supply through relative supply outlet (14, 15); and a pumping device (25) to selectively supply water from storage tanks (11, 12) to dental instruments (4), the pumping device (25) comprising a compressed air circuit (26) communicating with the storage tanks (11, 12) and, for each storage tank (11, 12), valve means (27, 28), which selectively connect the compressed air circuit (26) with the storage tank (11, 12) itself, and are mobile between an open position and a closed position of the compressed air circuit (26); and **characterized in that** each valve device (17) comprises a floating shutter (18), which is mobile under the thrust of the liquid contained in the relative storage tank (11, 12) from an open position to a closed position of its relative supply outlet (14, 15), and is maintained in its closed position by the thrust of the compressed air supplied inside the storage tank (11, 12) through the relative valve means (27, 28).

2. A dental work station as claimed in Claim 1, wherein shutter (18) has a longitudinal, substantially vertical, axis (19).

3. A dental work station as claimed in Claim 1 or 2, wherein storage tanks (11, 12) are pressurized tanks.

4. A dental work station as claimed in any one of the foregoing Claims, wherein each storage tank (11, 12) comprises a first detecting device (30) to detect the complete filling of storage tank (11, 12) itself and to operate the opening of relative valve means (27, 28).

5. A dental work station as claimed in any one of the foregoing Claims, wherein each storage tank (11, 12) comprises a second detecting device (31) to detect the complete emptying of storage tank (11, 12) itself and to operate the closing of relative valve means (27, 28).

6. A dental work station as claimed in any one of the foregoing Claims wherein shutter (18) comprises a stem (20) slidingly coupled to its relative supply outlet (14, 15) and an inverted bell-shaped closure element (22).

7. A dental work station as claimed in any one of the foregoing Claims, wherein shutter (18) is gravity mobile from its closed position to its open position.

8. A dental work station as claimed in any one of the foregoing Claims, wherein distribution tank (8) is an atmospheric-pressure tank.

9. A dental work station as claimed in any one of the foregoing Claims, wherein distribution tank (8) is placed above storage tanks (11, 12) to supply through gravity the liquid to the storage tanks (11, 12) themselves.

10. A dental work station as claimed in any one of the foregoing Claims, wherein supply unit (6) comprises, moreover, a supply device to add a hygienizing additive to the water contained in distribution tank (8).

## Patentansprüche

1. Zahnärztlicher Arbeitsplatz mit einer Anzahl von Dentalinstrumenten (4); eine Zuführeinheit (6) zum Zuführen einer Flüssigkeit zu den Dentalinstrumenten (4); die Zufuhreinheit (6) umfaßt einen Vertellbehälter (8), angeschlossen an einen hydraulischen Wasserzufuhrkreis; zwei Speicherbehälter (11,12), parallel zueinander montiert und angeordnet zwischen dem Verteilbehälter (8) und den Dentalinstrumenten (4), jeder umfassen wenigstens einen entsprechenden Zufuhrauslass (14, 15), der mit dem Verteilbehälter (8) kommuniziert; für jeden Speicherbehälter (11, 12) ein Ventil (17) zum selektiven Steuern der Flüssigkeitszufuhr durch den betreffenden Zufuhrauslass (14, 15); sowie eine Pumpeinrichtung (25) zum selektiven Zuführen von Wasser aus den Speicherbehältern (11,12) zu Dentalinstrumenten (4), wobei die Pumpeinrichtung (25) einen Druckluftkreis (26) umfaßt, der mit den Speicherbehältern (11, 12) kommuniziert, und mit Ventilen (27, 28) für jeden Speicherbehälter (11, 12), die selektiv den Druckluftkreis (26) an den Speicherbehälter (11,12) anschließen und die zwischen einer Offen-Position und einer Schließposition des Druckluftkreises (26) einstellbar sind, **dadurch gekennzeichnet, dass** jedes Ventil (17) einen Schwimmverschluss (18) umfasst, der unter dem Druck der in dem betreffenden Speicherbehälter (11_{,} 12) enthaltenen Flüssigkeit beweglich ist zwischen einer Offen-Stellung und einer Schließstellung seines jeweiligen Zufuhrauslasses (14, 15), und der in Schließstellung durch den Druck der Druckluft gehalten wird, die durch das jeweilige Ventil (27, 28) in den Speicherbehälter (11, 12) eingeleitet wird.

2. Zahnärztlicher Arbeitsplatz nach Anspruch 1, wobei der Verschluss (18) eine langgestreckte, im Wesentlichen vertikale Achse (19) aufweist.

3. Zahnärztlicher Arbeitsplatz nach Anspruch 1 oder 2, wobei die Speicherbehälter (11, 12) Druckbehälter sind.

4. Zahnärztlicher Arbeitsplatz nach einem der vorausgegangenen Ansprüche wobei jeder Speicherbehälter (11, 12) einen ersten Detektor (30) zum Erfassen der vollständigen Füllung des Speicherbehälters (11,12) und zum Betätigen des Öffnens des jeweiligen Ventils (27, 28) umfasst.

5. Zahnärztlicher Arbeitsplatz nach einem der vorausgegangenen Ansprüche, wobei jeder Speicherbehälter (11, 12) einem zweiten Detektor (31) zum Umfassen des vollständigen Leerens des Speicherbehälters (11,12) und zum Betätigen des Schließens des jeweiligen Ventiles (27, 28) aufweiset.

6. Zahnärztliche Arbeitsplatz nach einem der vorausgegangenen Ansprüche, wobei der Verschluss (18) einen Schaft (20) umfasst, der gleitend an seinen jeweiligen Zufuhranschluss (14,15) an und ein umgekehrtes glockenförmiges Verschlusselement (22) angeschlossen ist.

7. Zahnärztliche Arbeitsplatz nach einem der vorausgegangenen Ansprüche, wobei der Verschluß (18) aus seiner geschlossenen Position in seine offene Position durch Schwerkraft beweglich ist.

8. Zahnärztlicher Arbeitsplatz nach einem der vorausgegangenen Ansprüche, wobei der Verteilbehälter (8) ein unter Atmosphärendruck stehender Behälter ist.

9. Zahnätztlicher Arbeitsplatz nach einem der vorausgegangenen Ansprüche, wobei der Verteilbehälter (8) oberhalb der Speicherbehälter (11,12) angeordnet ist, um die Flüssigkeit den Speicherbehältern (11,12) durch Schwerkraft zuzuführen.

10. Zahnärztlicher Arbeitsplatz nach einem der vorausgegangenen Ansprüche, wobei die Zuführeinheit (6) weiterhin eine Zufuhreinrichtung umfaßt, um dem im Verteilbehälter (8) enthaltenen Wasser hygienisch machende Zusatzstoffe zuzuführen.

## Revendications

1. Poste de soins dentaires comprenant un certain nombre d'instruments dentaires (4) ; et une unité d'alimentation (6) pour alimenter en liquide des instruments dentaires (4) ; l'unité d'alimentation (6) comprenant un réservoir de distribution (8) connecté à un circuit hydraulique d'alimentation en eau ; deux réservoirs de stockage (11, 12) montés en parallèle, situés entre le réservoir de distribution (8) et les instruments dentaires (4), et comprenant chacun au moins une sortie d'alimentation respective (14, 15) communiquant avec le réservoir de distribution (8) ; pour chaque réservoir de stockage (11, 12), un dispositif à valve (17) pour contrôler sélectivement l'alimentation en liquide via une sortie d'alimentation relative (14, 15) ; et un dispositif de pompage (25) pour alimenter sélectivement en eau à partir des réservoirs de stockage (11, 12) vers des instruments dentaires (4), le dispositif de pompage (25) comprenant un circuit d'air comprimé (26) communiquant avec les réservoirs de stockage (11, 12) et, pour chaque réservoir de stockage (11, 12), des moyens de valve (27, 28), qui connectent sélectivement le circuit d'air comprimé (26) avec le réservoir de stockage (11, 12) lui-même, et sont mobiles entre une position ouverte et une position fermée du circuit d'air comprimé (26) ; et **caractérisé en ce que** chaque dispositif à valve (17) comprend un obturateur flottant (18) qui est mobile sous l'effet de la poussée du liquide contenu dans le réservoir de stockage relatif (11, 12) d'une position ouverte à une position fermée de sa sortie d'alimentation relative (14, 15), et est maintenu dans sa position fermée par la poussée de l'air comprimé alimenté à l'intérieur du réservoir de stockage (11, 12) par les moyens de valve relatifs (27, 28).

2. Poste de soins dentaires tel que revendiqué dans la Revendication 1, dans lequel l'obturateur (18) a un axe longitudinal sensiblement vertical (19).

3. Poste de soins dentaires tel que revendiqué dans la Revendication 1 ou 2, dans lequel les réservoirs de stockage (11, 12) sont des réservoirs sous pression.

4. Poste de soins dentaires tel que revendiqué dans l'une quelconque des Revendications précédentes, dans lequel chaque réservoir de stockage (11, 12) comprend un premier dispositif de détection (30) pour détecter le remplissage complet du réservoir de stockage (11, 12) lui-même et pour effectuer l'ouverture des moyens de valve relatifs (27, 28).

5. Poste de soins dentaires tel que revendiqué dans l'une quelconque des Revendications précédentes, dans lequel chaque réservoir de stockage (11, 12) comprend un deuxième dispositif de détection (31) pour détecter la vidange complète du réservoir de stockage (11, 12) lui-même et pour effectuer la fermeture des moyens de valve relatifs (27, 28).

6. Poste de soins dentaires tel que revendiqué dans l'une quelconque des Revendications précédentes, dans lequel l'obturateur (18) comprend une tige (20) reliée de manière coulissante à sa sortie d'alimentation relative (14, 15) et un élément de fermeture en forme de cloche inversée (22).

7. Poste de soins dentaires tel que revendiqué dans l'une quelconque des Revendications précédentes, dans lequel l'obturateur (18) est mobile par gravité de sa position fermée à sa position ouverte.

8. Poste de soins dentaires tel que revendiqué dans l'une quelconque des Revendications précédentes, dans lequel le réservoir de distribution (8) est un réservoir à pression atmosphérique.

9. Poste de soins dentaires tel que revendiqué dans l'une quelconque des Revendications précédentes, dans lequel le réservoir de distribution (8) est disposé au-dessus des réservoirs de stockage (11, 12) pour alimenter par gravité en liquide les réservoirs de stockage (11, 12).

10. Poste de soins dentaires tel que revendiqué dans l'une quelconque des Revendications précédentes, dans lequel l'unité d'alimentation (6) comprend, de plus, un dispositif d'alimentation pour ajouter un additif hygiénisant à l'eau contenue dans le réservoir de distribution (8).
